(19) Europäisches Patentamt
European Patent Office
Office européen des brevets

(11) **EP 1 744 309 A1**

(12) # EUROPEAN PATENT APPLICATION
published in accordance with Art. 158(3) EPC


(43) Date of publication:
**17.01.2007 Bulletin 2007/03**

(21) Application number: **05734454.1**

(22) Date of filing: **19.04.2005**

(51) Int Cl.:
***G11B 7/135*** *(2006.01)* ***G02B 3/10*** *(2006.01)*
***G02B 5/18*** *(2006.01)* ***G02B 13/18*** *(2006.01)*

(86) International application number:
**PCT/JP2005/007476**

(87) International publication number:
**WO 2005/106866 (10.11.2005 Gazette 2005/45)**

(84) Designated Contracting States:
**DE FR**

(30) Priority: **27.04.2004 JP 2004131349**



(71) Applicant: **Konica Minolta Opto, Inc.**
**Hachioji-shi,**
**Tokyo 192-8505 (JP)**

(72) Inventor: **IKENAKA, Kiyono**
**c/o Konica Minolta Opto, Inc.**
**Hachioji-shi, Tokyo 1928505 (JP)**

(74) Representative: **Roberts, Mark Peter**
**J.A. Kemp & Co.,**
**14 South Square,**
**Gray's Inn**
**London WC1R 5JJ (GB)**


(54) **OBJECTIVE LENS AND OPTICAL PICKUP**


(57) The present invention relates to an objective lens used for reproducing and/or recording of information for at least two types of optical discs including high density discs, and has excellent wavelength characteristics, temperature characteristics and tracking characteristics and to provide an optical pickup apparatus employing this objective lens. An objective lens according to the present invention is used for an optical pickup apparatus reproducing and/or recording information for a first optical disc having a protective substrate with a thickness t1 and a second optical disc having a protective substrate with a thickness t2 ($0.8 \times t1 \leq t2$). Each of the light fluxes with a wavelength $\lambda 1$ and a wavelength $\lambda 2$ enters into the objective lens and a diffractive structure is formed on the at least one optical surface of the objective lens, signs and values of an optical system magnification of the objective lens m1 and m2 for the light fluxes with wavelength $\lambda 1$ and $\lambda 2$ respectively are different each other, and the diffractive structure has a positive diffractive action.


FIG. 5

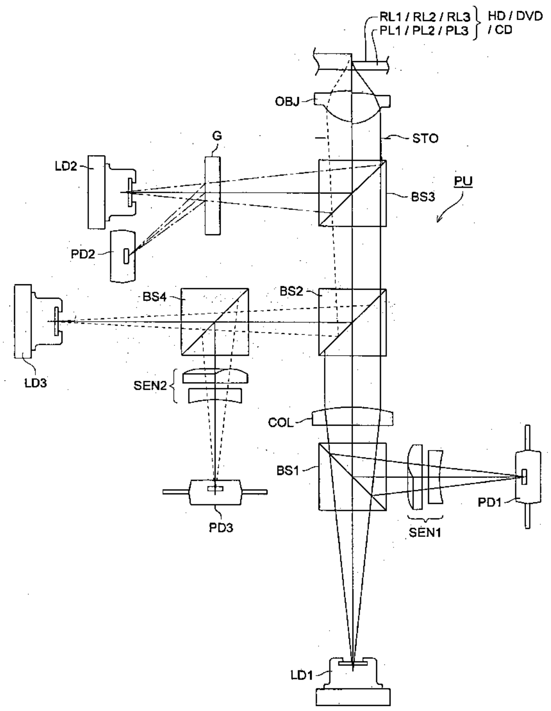


EP 1 744 309 A1

Printed by Jouve, 75001 PARIS (FR)

## Description

### TECHNICAL FIELD

The present invention relates to an objective lens and an optical pickup apparatus.

### BACKGROUND ART

In recent years, a trend toward a short wavelength of a laser light source used as a light source for reproducing information recorded on an optical disc or for recording information on an optical disc has been advanced, in an optical pickup apparatus, and there have been put to practical use laser light sources with a wavelength of 405 nm such as, for example, a violet semiconductor laser and a violet SHG laser wherein generation of the second harmonic is used for wavelength conversion of an infra-red semiconductor laser.

If these violet laser light sources are used, information in 15 - 20 GB can be recorded for an optical disc having a diameter of 12 cm, when using an objective lens with a numerical aperture (NA) identical to that of a digital versatile disc (which will be abbreviated as DVD, hereafter), and when NA of an objective lens is enhanced to 0.85, information in 23 - 27 GB can be recorded for an optical disc having a diameter of 12 cm. Hereafter, optical discs and magneto-optical discs which use a violet laser light source are generically called "a high density optical disc".

Incidentally, two standards are presently proposed for high density optical discs. One of them is a Blu-ray disc (which will be abbreviated as BD, hereafter) which employs an objective lens with NA 0.85 and has a protective layer whose thickness is 0.1 mm, and the other is HD DVD (which will be abbreviated as HD, hereafter) which employs an objective lens with NA 0.65 - 0.67 and has a protective layer whose thickness is 0.6 mm. When considering a possibility that these high density optical discs in the two standards appear on the market, a compatible optical pickup apparatus that can conduct recording and reproducing for both of the aforementioned high density optical discs as well as for the conventional DVD and CD is important, and it is especially preferable that compatibility is attained by an objective lens. The expression "compatibility is attained by an objective lens" in this case means that, when rays of light which are different each other in terms of only a wavelength enter the objective lens at the same angle, each ray of light can be converged on a recording surface of the optical disc corresponding to each wavelength.

On the other hand, in the optical pickup apparatus, it is required that the optical pickup apparatus operates safely, even when an individual difference of a laser to be incorporated causes the dispersion of an oscillation wavelength (wavelength characteristics), or even when instantaneous wavelength changes (chromatic aberration) representing the so-called mode-hop or gentle wavelength changes (temperature characteristics) originating from a rise in ambient temperature are caused during operations. For the purpose above mentioned, it is necessary that there is no deterioration of wavefront aberration of the objective lens for the changes in ambient conditions.

A conventional DVD-CD compatible lens is a diffractive lens wherein compatibility is attained by using diffraction actions even for a light source having a wavelength difference such as that between 655 nm and 785 nm, and aberration deterioration is controlled for environmental characteristics which are accompanied by wavelength changes, such as chromatic aberration, wavelength characteristics and temperature characteristics. However, if this technology is applied on compatibility for high density discs and conventional discs, the following problem takes place. The problems is that there is no solution which satisfies both of compatibility and ambient characteristics even when designing with one parameter of wavelength-dependence of diffraction, for the lens compatible for high density discs and conventional discs, while, the wavelength-dependence of the diffraction determined to attain compatibility just satisfies ambient characteristics, in the DVD-CD compatible lens.

In the invention described in Patent Document 1, there is known the technology to use an objective optical system on which a diffractive structure is provided, and to attain compatibility under an optical system magnification that is zero, in each of HD and DVD.

(Patent Document 1) TOKKAI No. 2002-298422

In the invention described in Patent Document 1, there arises a problem wherein wavelength characteristics caused by diffraction grow greater, although coma caused by lens shift in the case of tracking is not generated in this method, and wavefront aberration is deteriorated when an oscillation wavelength in a certain lot of lasers is different from that in another lot.

### DISCLOSURE OF INVENTION

An object of the invention is backed by consideration of the problems mentioned above, and is to provide an objective lens that is used for reproducing and/or recording of information for at least two types of optical discs including high density discs, and has excellent wavelength characteristics, temperature characteristics and tracking characteristics and to provide an optical pickup apparatus employing this objective lens.

To solve objects stated above, the objective lens relating to the invention is provided with a diffractive structure and has a construction in which optical system magnifications corresponding respectively to two types of optical discs are different from each other and at least one optical system magnification is not zero for providing another design flexibility. By attaining compatibility for high density optical discs and conventional optical discs by using the diffractive structure and optical system magnifications each being different corresponding to each optical disc, wavelength-dependence of diffraction suitable for correcting ambient characteristics can be obtained. When the optical system magnification is not zero, a ray of light entering the objective lens makes an angle with an optical axis, to cause a problem to generate coma when tracking the objective lens, but it is possible to control an amount of aberration for coma by setting the optical system magnification which is so gentle as to be close to zero.

In the present specification, an optical disc having a protective layer with a thickness from several nanometers to several tens of nanometers on an information recording surface and an optical disc having a protective layer or a protective film whose thickness is zero are also assumed to be included in high density optical discs, in addition to BD and HD mentioned above.

In the present specification, DVD is a general term for optical discs of DVD series such as DVD-ROM, DVD-Video, DVD-Audio, DVD-RAM, DVD-R, DVD-RW, DVD+R and DVD+RW, and CD is a general term for optical discs of CD series such as CD-ROM, CD-Audio, CD-Video, CD-R and CD-RW.

## BRIEF DESCRIPTION OF DRAWINGS

Each of Figs. 1 (a) and 1 (b) is a diagram showing a phase structure.

Each of Figs. 2 (a) and 2 (b) is a diagram showing a phase structure.

Each of Figs. 3 (a) and 3 (b) is a diagram showing a phase structure.

Each of Figs. 4 (a) and 4 (b) is a diagram showing a phase structure.

Fig. 5 is a top view of primary parts showing a construction of an optical pickup apparatus.

## BEST MODE FOR CARRYING OUT THE INVENTION

A preferred embodiment of the invention will be explained as follows.

To solve the subjects stated above, a structure described in Item 1 is represented by an objective lens for an optical pickup apparatus at least reproducing and/or recording information by using a light flux with wavelength $\lambda 1$ emitted from a first light source for a first optical disc having protective substrate with a thickness t1 and reproducing and/or recording information by using a light flux with wavelength $\lambda 2$ ($1.5 \times \lambda 1 \le \lambda 2 \le 1.7 \times \lambda 1$) emitted from a second light source for a second optical disc having a protective substrate with a thickness t2 ($0.8 \times t1 \le t2$), wherein light fluxes having respectively the wavelength $\lambda 1$ and wavelength $\lambda 2$ enter the objective lens, the objective lens is provided with a diffractive structure formed on at least one optical surface of the objective lens, optical system magnification m1 of the objective lens for the light flux with wavelength $\lambda 1$ and optical system magnification m2 of the objective lens for light with wavelength $\lambda 2$ have different signs and values from each other, and the diffractive structure has a positive diffractive action.

The diffractive structure formed on the optical surface of the objective lens is a structure to correct spherical aberration caused by a thickness difference between the protective layer of the first optical disc and that of the second optical disc, and/or wavefront aberration caused by changes of a refractive index of the objective lens originating from changes in ambient temperature and by changes in oscillation wavelength.

The diffractive structure mentioned above includes a structure which is composed of plural ring-shaped zones 100 and its sectional form including an optical axis is in a serrated form, as shown schematically in Figs. 1 (a) and 1 (b), a structure which is composed of plural ring-shaped zones 102 in which the directions of steps 101 are the same within an effective diameter, and its sectional view including an optical axis is in a form of stairways as shown schematically in Figs. 2 (a) and 2 (b), a structure which is composed of plural ring-shaped zones 103 in which a staircase structure is formed as shown schematically in Figs. 3 (a) and 3 (b), and a structure which is composed of plural ring-shaped zones 105 in which the directions of steps 104 change by turns on the half way of an effective diameter, as shown schematically in Figs. 4 (a) and 4 (b). Incidentally, in the present specification, the diffractive structures each being composed of plural ring-shaped zones as shown in Figs. 1 (a) and 1 (b), Figs. 2 (a) and 2 (b) and Figs. 4 (a) and 4 (b) are assumed to be expressed by a mark "DOE", and the diffractive structure composed of plural ring-shaped zones in which a staircase structure is formed as shown in Figs. 3 (a) and 3 (b) is assumed to be expressed by a mark "HOE".

Incidentally, "the positive diffractive action" means, for example, a diffractive action to be given when the third order spherical aberration is generated in the direction toward the under level for the passing light flux to cancel third order spherical aberration generated by in the direction toward the over level by the elongated wavelength.

By forming a diffractive structure having the positive diffractive action on the optical surface of the objective lens, as in the structure described in Item 1, it is possible to cancel the spherical aberration caused by the diffractive

action in the case of temperature changes, with the diffractive action by changes of an oscillation wavelength of the laser (light source). By setting optical system magnification m1 of the objective lens for a light flux with wavelength λ1 and optical system magnification m2 of the objective lens for light with wavelength λ2 so that their signs and numerical values may be different each other, compatibility for the first optical disc and the second optical disc is shared by the diffractive action and magnification changes, thus, the wavelength-dependence of the diffractive action does not become too great, and there is no problem for operations even when a wavelength only changes as in the case where an oscillation wavelength in a certain lot of lasers is different from that in another lot. Further, the coma originating from tracking of the objective lens becomes an optical system magnification at the level capable of conducting recording and reproducing.

A structure described in Item 2 is the objective lens described in Item 1, wherein the diffractive structure is defined by the following expression by the use of optical path difference function ϕ (h);

$$\phi(h) = C_2 \times h^2 + C_4 \times h^4 + \ldots + C_{2i} \times h^{2i}$$

and satisfies $C_4 < 0$.

Where h represents a height from an optical axis, $C_{2i}$ represents a coefficient of the optical path difference function and i represents a natural number.

A structure described in Item 3 is the objective lens described in Item 2, wherein the following expression is satisfied.

$$-1.0 \times 10^{-3} < C_4 < -1.0 \times 10^{-4}$$

A structure described in Item 4 is the objective lens described in Item 3, wherein the following expression is satisfied.

$$-7.0 \times 10^{-4} < C_4 < -4.5 \times 10^{-4}$$

By making the coefficient $C_4$ to be smaller than zero as in the structure described in Item 2, the diffracted light with wavelength λ1 generated when passing through the diffractive structure has a diffracting effect having a sign which is opposite to that of spherical aberration caused by a lens material when a wavelength changes, which makes it possible to correct spherical aberration characteristics in the case of changes in wavelength and temperature. Since an amount of spherical aberration in the case of changes in wavelength and temperature is proportional to the fourth power of NA, this technology is effective when it is used on BD having higher NA.

Incidentally, for making wavelength characteristics and temperature characteristics to be balanced, it is preferable to make the coefficient $C_4$ to be within the range in Item 3, and when the objective lens is made of ordinary optical resin such as, for example, "ZEONEX" (product name) made by Nippon Zeon Co. or "APEL" (product name) made by Mitsui Petroleum Chemical Industry Co., it is preferable to make the coefficient. $C_4$ to be within the range in Item 4.

A structure described in Item 5 is the objective lens described in Item 3 or Item 4, wherein the diffractive structure is a diffractive structure formed of a plurality of ring-shaped zones each being a concentric circle around an optical axis, and its cross section including an optical axis has a serrated shape, and distance d of a step of each of the plurality of ring-shaped zones along an optical axis satisfies the flowing expression;

$$(2N - 1) \times \lambda 1 / (n1 - 1) \leq d < 2N \times \lambda 1 / (n1 - 1).$$

Where n1 represents a refractive index of the objective lens for a light flux with the wavelength λ1, and N represents a natural number.

A structure described in Item 6 is the objective lens described in Item 5, wherein N = 2 holds.

If distance d of the step is established so that an optical path difference in approximate odd-numbered multiple may be given to the light flux with wavelength λ1, as in the structure described in Item 5, $N^{th}$ order diffracted light and $(N - 1)^{th}$ order diffracted light which are substantially the same in terms of diffraction efficiency are generated from the light flux with wavelength λ3 (1:8 x λ1 ≤ λ3 ≤ 2.2 x λ1) that enters the diffractive structure. In this case, when a comparison

is drawn between an occasion to use $N^{th}$ order diffracted light having a smaller amount of spherical aberration in the magnification identical to the aforesaid optical system magnification m1 among two diffracted light for reproducing and recording for the third optical disc, and an occasion wherein distance d of the step is established so that $2N \times \lambda 1 / (n1 - 1) \leq d < (2N + 1) \times \lambda 1 / (n1 - 1)$ may be satisfied, namely, that an optical path difference in even-numbered multiple may be given to the first light flux with wavelength λ1, and the diffracted light having the maximum diffraction efficiency among light fluxes with wavelength λ3 generated when passing through the diffractive structure, is used for reproducing and recording, the optical system magnification for correcting spherical aberration is closer to zero and aberration caused by tracking is smaller, in the former.

Incidentally, from the viewpoint of preventing a decline of diffraction efficiency in the case of wavelength fluctuations, the lower diffraction order number of the diffracted light is better, and if N is made to be equal to 2 as in Item 6, an optical system magnification of the objective lens for the first optical disc and the second optical disc becomes substantially to be zero, and coma in the case of tracking, temperature characteristics and wavelength characteristics are excellent.

A structure described in Item 7 is the objective lens described in any one of Items 1 - 6, wherein a wavefront aberration amount ΔW (λrms) generated when a wavelength of the light flux with wavelength λ1 changes by +5 nm satisfies $\Delta W \leq 0.05$.

In the structure described in Item 7, spherical aberration caused by wavelength change characteristics of the diffractive structure in the case of temperature changes arrives at a level capable of conducting recording and reproducing.

A structure described in Item 8 is the objective lens described in any one of Items 1 - 7, wherein at least one of the optical system magnification ml and the optical system magnification m2 is greater than zero and is not more than 1/100.

In the structure described in Item 8, compatibility for the first optical disc and the second optical disc can be shared by both the diffractive action and magnification changes.

A structure described in Item 9 is the objective lens described in any one of Items 1 - 8, wherein the diffractive power of the diffractive structure is negative.

By making the diffractive power to be negative as in Item 9, it is possible to correct chromatic aberration of a light flux with wavelength λ1 or wavelength λ2 in the case of conducting reproducing and/or recording of information for the first optical disc and the second optical disc.

A structure described in Item 10 is the objective lens described in Item 9, wherein a change amount of a position where a wavefront aberration is minimum dfb/d λ of the objective lens for the light flux with wavelength λ1 per 1 nm of wavelength change satisfies

$$|dfb/d\lambda| \leq 0.1 \ (\mu m/nm).$$

Where fb represents a distance from the objective lens to the first optical disc.

A structure described in Item 11 is the objective lens described in Item 9, wherein a change amount of a position where a wavefront aberration is minimum dfb/dλ of the objective lens along an optical axis per 1nm of a wavelength change for the wavelength λ2 satisfies;

$$|dfb/d\lambda| \leq 0.1 \ (\mu m/nm).$$

Where fb represents a distance from the objective lens to the second optical disc.

A structure described in Item 12 is the objective lens described in any one of Items 1 - 11, satisfying an expression t1 = t2.

In the structure described in Item 12, compatibility between the first optical disc and the second optical disc is only for correction of spherical aberration caused by chromatic aberration of wavelength λ1 and chromatic aberration of wavelength λ2, and a difference between optical system magnifications m1 and m2 and wavelength-dependence of a diffractive action can be made small.

A structure described in Item 13 is the objective lens described in any one of Items 1 - 11, satisfying an expression NA1 = NA2 when NA1 represents a numerical aperture of the emergence side of the objective lens on for the light flux with wavelength λ1, and NA2 represents a numerical aperture of the emergence side of the objective lens for the light flux with wavelength λ2.

In the structure described in Item 13, a difference of effective diameters of objective lenses in the case of conducting recording and reproducing for the first optical disc and the second optical disc is small, and thereby, aperture

restriction does not need to be provided individually.

A structure described in Item 14 is the objective lens described in any one of Items 1 - 13, wherein the first light source and the second light source are provided as separated bodies.

A structure described in Item 15 is the objective lens described in Item 14, wherein the first light source and the second light source are arranged on the optical axis respectively.

A structure described in Item 16 is the objective lens described in any one of Items 1 - 15, wherein a chromatic aberration correcting element having a function to correct chromatic aberration of a passing light flux, is provided on an optical path of at least one of the light fluxes respectively with wavelength $\lambda 1$ and wavelength $\lambda 2$.

In the structure described in Item 16, even when chromatic aberration can be corrected by the objective lens only for one light flux among light fluxes respectively with wavelength $\lambda 1$ and wavelength $\lambda 2$, chromatic aberration can be corrected also for the other wavelength by the chromatic aberration correcting element.

A structure described in Item 17 is the objective lens described in Item 16, wherein the chromatic aberration correcting element is a collimating lens.

A structure described in Item 18 is the objective lens described in any one of Items 1 - 11, wherein the objective lens is further used for an optical pickup apparatus reproducing and/or recording information by using the light flux with wavelength $\lambda 3$ ($1.8 \times \lambda 1 \leq \lambda 3 \leq 2.2 \times \lambda 1$) emitted from the third light source for the third optical disc with a protective substrate with thickness t3 ($t2 < t3$), and the light fluxes respectively with wavelengths $\lambda 1$, $\lambda 2$ and $\lambda 3$ enter the objective lens.

A structure described in Item 19 is the objective lens described in Item 18, wherein an aperture limiting element is arranged on an optical path of the light flux with wavelength $\lambda 3$.

In the structure described in Item 19, the numerical aperture for the wavelength $\lambda 3$ can be limited.

A structure described in Item 20 is the objective lens described in Item 18 or Item 19, wherein optical system magnification m3 of the objective lens for the light flux with wavelength $\lambda 3$ satisfies the following expression.

$$-1/10 \leq m3 \leq -1/100$$

In the structure described in Item 20, tracking characteristics for the light flux with wavelength $\lambda 3$ are on the level that makes recording and reproducing possible.

A structure described in Item 21 is the objective lens described in any one of Items 18 - 20, wherein the first light source, the second light source and the third light source are provided as separated bodies.

A structure described in Item 22 is the objective lens described in Item 21, wherein each of the first light source, the second light source and the third light source is provided on the optical axis.

A structure described in Item 23 is the objective lens described in any one of Items 18 - 22, wherein a chromatic aberration correcting element having a function to correct chromatic aberration of a passing light flux, is provided on an optical path of at least one of the light fluxes respectively with wavelength $\lambda 1$, wavelength $\lambda 2$ and wavelength $\lambda 3$.

In the structure described in Item 23, even when chromatic aberration can be corrected by the objective lens only for one light flux among light fluxes respectively with wavelength $\lambda 1$, wavelength $\lambda 2$ and wavelength $\lambda 3$, chromatic aberration can be corrected also for the other wavelength by the chromatic aberration correcting element.

A structure described in Item 24 is the objective lens described in Item 23, wherein the chromatic aberration correcting element is a collimating lens.

A structure described in Item 25 is the objective lens described in any one of Items 1 - 22, wherein focal length f1 of the objective lens for the light flux with wavelength $\lambda 1$ satisfies the following expression.

$$0.8 \text{ mm} \leq f1 \leq 4.0 \text{ mm}$$

A structure described in Item 26 is the objective lens described in any one of Items 1 - 25, wherein the objective lens is made of plastic.

A structure described in Item 27 is an optical pickup apparatus for at least reproducing and/or recording information for the first optical disc having a protective substrate with thickness t1 and the second optical disc having a protective substrate with thickness t2 ($0.8 \times t1 \leq t2$), the optical pickup apparatus including the first light source for emitting a light flux with wavelength $\lambda 1$ for reproducing and/or recording information for the first optical disc, the second light source for emitting a light flux with wavelength $\lambda 2$ ($1.5 \times \lambda 1 \leq \lambda 2 \leq 1.7 \times \lambda 1$) for reproducing and/or recording information for the second optical disc, and the objective lens described in any one of Items 1 - 26 that converges the light flux with wavelength $\lambda 1$ and the light flux with wavelength $\lambda 2$ on an information recording surfaces of the first optical disc and on

that of the second optical disc, respectively.

A preferred embodiment for practicing the invention will be explained in detail as follows, referring to the drawings.

Fig. 5 is a diagram showing schematically the structure of optical pickup apparatus PU capable of conducting recording and reproducing of information properly for any of HD (first optical disc), DVD (second optical disc) and CD (third optical disc). Optical specifications of HD include wavelength $\lambda 1$ = 407 nm, protective layer (protective substrate) PL1 thickness t1 = 0.6 mm and numerical aperture NA1 = 0.65, optical specifications of DVD include wavelength $\lambda 2$ = 655 nm, protective layer PL2 thickness t2 = 0.6 mm and numerical aperture NA2 = 0.65, and optical specifications of CD include wavelength $\lambda 3$ = 785 nm, protective layer PL3 thickness t3 = 1.2 mm and numerical aperture NA3 = 0.51.

However, the combination of the wavelength, the protective layer thickness and the numerical aperture is not limited to the foregoing. Further, BD having thickness t1 of about 0.1 mm for protective layer PL1 may also be used as the first optical disc.

Further,' optical system magnification (first magnification 1l) of the objective lens in the case of conducting recording and/or reproducing of information for the first optical disc is to be m1 = 0. Namely, in the structure of the objective lens OBJ in the present embodiment, the first light flux with wavelength $\lambda 1$ enters the objective lens as collimated light.

Further, optical system magnification (second magnification m2) of the objective lens in the case of conducting recording and/or reproducing of information for the second optical disc is under the condition of $0 < m2 \leq 1/100$. Namely, in the structure of the objective lens OBJ in the present embodiment, the second light flux enters the objective lens as gently converged light.

Incidentally, in the invention, a condition has only to be that at least one of the first magnification m1 and the second magnification m2 is not zero, and an expression $m1 \neq m2$ holds, and within a range of optical system magnification satisfying the aforesaid condition, the second light flux may be made to enter as collimated light and the first light flux may be made to enter as gently converged light, or both of the first light flux and the second light flux may be made to enter as gently converged light.

Further, with regard to the optical system magnification (third magnification m3) of the objective lens in the case of conducting recording and/or reproducing of information for the third optical disc, there is no limitation in particular, and in the structure in the present embodiment, the third light flux enters as gently divergent light ($-1/10 \leq m3 \leq -1/100$).

The optical pickup apparatus PU is composed of violet semiconductor laser LD1 (first light source) emitting a laser light flux (first light flux) that is emitted when conducting recording and reproducing of information for HD and has a wavelength of 407 nm, photo-detector PD1 for the first light flux, red semiconductor laser LD2 (second light source) emitting a laser light flux (second light flux) that is emitted when conducting recording and reproducing of information for DVD and has a wavelength of 655 nm, photo-detector PD2 for the second light flux, infrared semiconductor laser LD3 (third light source) emitting a laser light flux (third light flux) that is emitted when conducting recording and reproducing of information for CD and has a wavelength of 785 nm, photo-detector PD3 for the third light flux, collimating lens COL through which only the first light flux passes, objective lens OBJ whose optical surface has thereon a diffractive structure, and whose both sides having a function to converge a laser light flux on each of information recording surfaces RL1, RL2 and RL3 are aspheric, a biaxial actuator (not shown) that moves the objective lens in the prescribed direction, first beam splitter BS1, second beam splitter BS2, third beam splitter BS3, fourth beam splitter BS4, diffraction plate G, diaphragm STO, and sensor lenses SEN 1 and SEN 2.

In optical pickup apparatus PU, when conducting recording and reproducing of information for HD, violet semiconductor laser LD1 is made to emit light first, as a light path is drawn with solid lines in Fig. 5. A divergent light flux emitted from the violet semiconductor laser LD1 passes through the first beam splitter BS1 and arrives at collimating lens COL.

Then, when passing through the collimating lens COL, the first light flux is converted into collimated light which passes through second beam splitter BS2, third beam splitter BS3 and diaphragm STO to arrive at objective lens OBJ to become a spot formed by the objective lens OBJ on information recording surface RL1 through first protective layer PL1. The objective lens OBJ is moved for focusing and tracking by a biaxial actuator that is arranged around the objective lens.

A reflected light flux modulated by information pits on the information recording surface RL1 passes again through objective lens OBJ, third beam splitter BS3, second beam splitter BS2 and collimating lens COL to be branched by the first beam splitter BS1, then, is given astigmatism by sensor lens SEN1, and is converged on a light-receiving surface of photo-detector PD1. Thus, by using output signals of the photo-detector PD1, it is possible to read information recorded on HD.

Further, when conducting recording and reproducing of information for DVD, red semiconductor laser LD2 is made to emit light first, as a light path is drawn with one-dot chain lines in Fig. 5. A divergent light flux emitted from the red semiconductor laser LD2 passes through diffraction plate G, then, is reflected by third beam splitter BS3, and passes through diaphragm STO to arrive at objective lens OBJ as a gently converged light, to become a spot formed by the

objective lens OBJ on information recording surface RL2 through second protective layer PL2. The objective lens OBJ is moved for focusing and tracking by a biaxial actuator that is arranged around the objective lens.

A reflected light flux modulated by information pits on the information recording surface RL2 passes again through objective lens OBJ, then, its course is changed when passing through diffraction plate G after being reflected by third beam splitter BS3, and is converged on a light-receiving surface of photo-detector PD2. Thus, by using output signals of the photo-detector PD2, it is possible to read information recorded on DVD.

Further, when conducting recording and reproducing of information for CD, infrared semiconductor laser LD3 is made to emit light first, as a light path is drawn with dotted lines in Fig. 5. A divergent light flux emitted from the infrared semiconductor laser LD3 passes through fourth beam splitter BS4 to be reflected by the second beam splitter BS2, then, passes through third beam splitter BS3 and diaphragm STO to arrive at objective lens OBJ, to become a spot formed by the objective lens OBJ on information recording surface RL3 through third protective layer PL1. The objective lens OBJ is moved for focusing and tracking by a biaxial actuator that is arranged around the objective lens.

A reflected light flux modulated by information pits on the information recording surface RL3 passes again through objective lens OBJ and third beam splitter BS3, then, is reflected by second beam splitter BS2 to be branched by fourth beam splitter BS4, and is given astigmatism by sensor lens SEN 2 to be converged on a light-receiving surface of photo-detector PD3. Thus, by using output signals of the photo-detector PD3, it is possible to read information recorded on CD.

Next, a structure of the objective lens OBJ will be explained.

An objective lens is a plastic single lens whose plane of incidence S1 (optical surface on the light source side) and plane of emergence S2 (optical surface on the optical disc side) are constituted with an aspheric surface.

On the most area of the plane of incidence S1, there is formed diffractive structure DOE, and the plane of emergence S2 is a refracting interface.

The diffractive structure DOE is made of plural ring-shaped zones in a form of concentric circles each having its center on the optical axis, and its sectional view including an optical axis is in a serrated form. Distance d of a step is established so that the distance d in the optical axis direction of each ring-shaped zone may satisfy the following expression:

$$(2N - 1) \times \lambda 1 / (n1 - 1) \leq d < 2N \times \lambda 1 / (n1 - 1),$$

where n1 represents a refractive index of the objective lens for a light flux with the wavelength λ1, and N represents a natural number, namely, an optical path difference in odd-numbered multiple may be given to the first light flux with wavelength λ1. Owing to this, diffraction efficiency of diffracted light (for example, +third order diffracted light, for N = 2) for which the diffraction order number is an odd number for wavelength 407 nm (refractive index of the objective lens on which diffractive structure DOE is formed for wavelength 407 nm is 1.559806) becomes 100% substantially, and when the second light flux (refractive index of the objective lens on which diffractive structure DOE is formed for wavelength 655 nm is 1.540725) enters the diffractive structure DOE, diffraction efficiency that +second order diffracted light is 88% is produced, whereby, sufficient diffraction efficiency can be obtained in both wavelength areas for the first light flux and the second light flux.

On the other hand, when the third light flux (refractive index of the objective lens on which diffractive structure DOE is formed for wavelength 785 nm is 1.537237) enters the diffractive structure DOE, +second order diffracted light and +third order diffracted light are generated at nearly the same percentage of about 40%. In this case, when making a comparison between an occasion wherein the second diffracted light having smaller amount of spherical aberration in the same magnification as in the aforesaid optical system magnification m1 among two diffracted light is used for reproducing and recording for CD, and an occasion wherein distance d of a step is established so that $2N \times \lambda 1 / (n1-1) \leq d < (2N + 1) \times \lambda 1 / (n1 - 1)$ may be satisfied, namely, an optical path difference in approximate even-numbered multiple may be given to the first light flux with wavelength λ1, and the diffracted light having the maximum diffraction efficiency among the third light flux generated when passing through the diffractive structure is used for reproducing and recording for CD, an optical system magnification for correcting spherical aberration is closer to zero and aberration caused in the course of tracking can be made smaller, in the former.

The diffractive structure DOE is expressed by an optical path difference that is added to a transmission wave front by this structure, and this optical path difference is expressed by optical path difference function ϕ (h) (mm) that is defined by substituting a prescribed coefficient in the following Numeral 1, when h (mm) represents a height in the direction perpendicular to the optical axis, $C_{2i}$ represents a coefficient of the optical path difference function and i represents a natural number.

(Numeral 1)

Optical path difference function

$$\Phi(h) = \sum_{i=0} C_{2i} h^{2i}$$

In the present embodiment, $C_4$ in the Numeral 1 above is established to satisfy $C_4 < 0$ so that the diffractive structure DOE may have a positive diffractive action.

Incidentally, it is preferable to satisfy $-1.0 \times 10^{-3} < C_4 < -1.0 \times 10^{-4}$, and it I more preferable to satisfy $-7.0 \times 10^{-4} < C_4 < -4.5 \times 10^{-4}$.

By setting the diffractive structure DOE as stated above, it is possible to give positive diffractive action to at least one light flux (first light flux with wavelength λ1, in the present embodiment) among light fluxes respectively with wavelength λ1, wavelength λ2 and wavelength λ3 passing through the diffractive structure, and to control an amount of changes in wavefront aberration originating from wavelength fluctuation of the first light flux caused by changes in ambient temperatures, thus, an objective lens excellent in temperature characteristics can be obtained.

Specifically, a wavefront aberration change amount △W (λ rms) generated in the case where a wavelength of a light flux with wavelength λ1 is fluctuated by +5 nm by ambient temperature changes is established to satisfy $\Delta W \leq 0.05$.

It is further preferable that the diffractive structure has negative diffractive power, whereby, chromatic aberration of a light flux with wavelength λ1 or λ2 in the case of conducting reproducing and/or recording of information for HD and DVD can be corrected.

To be concrete, by setting the diffractive structure DOE so that a change amount of a position where a wavefront aberration is minimum dfb/dλ, of the objective lens along an optical axis per 1 nm of a wavelength change for the wavelength λ1 may satisfy $|dfb/d\lambda| \leq 0.1$ (μm/nm), chromatic aberration of the light flux with wavelength λ1 can be corrected, and an objective lens having excellent wavelength characteristics can be obtained. Further, by setting the diffractive structure DOE so that a change amount of a position where a wavefront aberration is minimum dfb/dλ of the objective lens along an optical axis per 1 nm of a wavelength change for the wavelength λ2 may satisfy $|dfb/d\lambda| \leq 0.1$ (μm/nm), chromatic aberration of the light flux with wavelength λ2 can be corrected, and an objective lens having excellent wavelength characteristics can be obtained.

In the present embodiment, the first light source, the second light source and the third light source are arranged separately and on the optical axis, and sine conditions of the objective lens are satisfied for a high density optical disc having mainly a narrow tolerance of performance.

Therefore, when a high density optical disc is used, even when gently converged light, for example, enters the objective lens OBJ, coma caused by tracking of the objective lens OBJ is not a problem, and in the case of CD, a magnification among the magnification and sine conditions both representing main causes for generation of coma in the case of tracking of the objective lens OBJ, is small, whereby the coma turns out to be at the level that is fit for the sufficient use for recording and reproducing, thus, an objective lens excellent in tracking characteristic can be obtained, although the sine conditions are not satisfied because the protective layer thickness and an optical system magnification of the objective lens are greatly different for a high density optical disc.

Incidentally, when coma in the course of tracking needs to be further corrected, a coma correcting element may be provided to be closer to the light source on the objective lens OBJ, or a collimating lens or a coupling lens having a correcting function may be provided.

It is further possible to employ the structure wherein aperture restricting element AP is arranged in the vicinity of optical surface S1 of the objective lens OBJ, as an aperture restricting element for restricting an aperture corresponding to NA3, and the aperture restricting element AP and the objective lens OBJ are driven for tracking integrally by a biaxial actuator.

On an optical surface of the aperture restricting element AP in this case, there is formed wavelength-selecting filter WF having the transmittance wavelength selectivity. This wavelength-selecting filter WF makes an area within NA3 to transmit all wavelengths from the first wavelength λ1 to the third wavelength λ3, then, intercepts only the third wavelength λ3 in the area from NA3 to NA1, and has the transmittance wavelength selectivity to transmit the first wavelength λ1 and the second wavelength λ2, which makes it possible to conduct aperture restriction corresponding to NA3 with the wavelength selectivity.

Further, a method to restrict an aperture also includes a method to switch an aperture mechanically and a method to utilize liquid crystal phase control element LCD which will be described later, in addition to the method to utilize the wavelength-selecting filter WF.

Though it is preferable, from the viewpoints of light weight and low prices, that the objective lens OBJ is made

of plastic, it may also be made of glass if light stability and temperature stability are taken into consideration. Though a refraction type glass mold aspheric lens is mainly on the market presently, a glass mold lens on which a diffractive structure is provided may also be manufactured, if low-melting glass under development is used. Further, under the circumstances of development of plastic for optical use, there is available a material wherein a change of refractive index caused by temperature changes is less. This material is one wherein a change of refractive index of the total resin caused by temperature changes is made small, by mixing inorganic fine particles in which signs of refractive index changes are opposite to each other depending on temperatures, and in the same way, there is a material in which dispersion of the total resins is made small by mixing inorganic fine particles having small dispersion, thus, if these materials are used for the objective lens for BD, more effect is produced.

As these resins, there may be used resin composition (X) that includes polymer (A) having an ethylenically unsaturated monomer unit containing an alicyclic group and antioxidant (B) having a phosphoric ester structure and phenol structure in a molecule.

Resin composition (Y) including polymer (A) having an ethylenically unsaturated monomer unit containing an alicyclic group and antioxidant (B) expressed by general formula (1) can also be used.

(Formula 1)

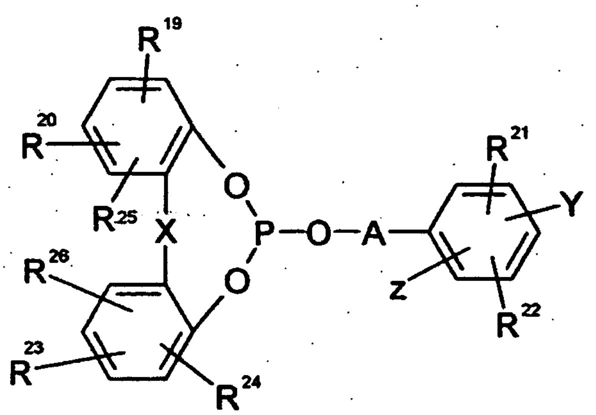

(1)

In the general formula (1), R19 through R24 each independently represent a hydrogen atom, an alkyl group having 1 - 8 carbon atoms, a cycloalkyl group having 5 to 8 carbon atoms, an alkyl cycloalkyl group having 6 to 12 carbon atoms, an aralkyl group having 7 to 12 carbons or a phenyl group, and R25 - R26 each independently represent a hydrogen atom or an alkyl group having 1 to 8 or carbon atoms. X represents single bond, a sulfur atom or CHR27-group (R27 represents a hydrogen atom, an alkyl group having 1 to 8 carbons or a cycloalkyl group having 5 to 8 carbon atoms). A represents an alkylene group having 2 to 8 carbon atoms or a *-COR28-group (R28 shows single bond or an alkylene group having 1 to 8 carbons, and the symbol "*" shows that it is bonded to the oxygen side). Either one of Y and Z represents a hydroxyl group, an alkoxy group having 1 to 8 carbon atoms or an aralkyloxy group having 7 to 12 carbon atoms, and the other represents a hydrogen atom or an alkyl group having 1 to 8 carbon atoms.

Further, it is preferable that the aforesaid resins (X) and (Y) further contain hindered amine type antioxidant.

It is further preferable that the aforesaid resins (X) and (Y) further contain hindered amine type light stabilizer (D). The hindered amine type light stabilizer (D) is a substance having a number-average molecular weight of 1500 - 5000 selected from a group including a polycondensation compound of dibutylamine, 1,3,5-triazine, and N,N'-bis(2,2,6,6-tetramethyl-4-piperidyl)butylamine, poly[{(1,1,3,3-tetramethylbutyl)amino-1,3,5-triazie-2,4-diil}{(2,2,6,6-tetramethyl-4-piperidyl)imino}hexamethylene{(2,2,6,6-tetramethyl-4-piperidyl)imino}] and a polymerization compound of dimethylsuccinate and 4-hydroxy-2,2,6,6-tetramethyl-1-piperidineethanol.

By forming a diffractive structure having a positive diffractive action on an optical surface of the objective lens as stated above, and by setting so that optical system magnification of at least one of optical system magnification m1 of the objective lens for a light flux with wavelength $\lambda 1$ and optical system magnification m2 of the objective lens for a light flux with wavelength $\lambda 2$ is not 0 and an expression $m1 \neq m2$ may hold, an objective lens for compatibility excellent in wavelength characteristics, temperature characteristics and tracking characteristics, and an optical pickup apparatus are obtained.

**EXAMPLES**

An example of the optical element shown in the embodiment stated above will be explained as follows.

Example 1

Table 1 shows lens data of Example 1.

(Table 1)

Example 1 Lens data

| | | | |
|---|---|---|---|
| Focal length of objective lens | $f_1$=3.2mm | $f_2$=3.27mm | $f_3$=3.27mm |
| Numerical aperture on the image side | NA1:0.65 | NA2:0.65 | NA3:0.51 |
| Diffraction order number on 2nd surface | n1:3 | n2:2 | n3:2 |
| Magnification | m1:0 | m2:1/185.2 | m3:-1/55.6 |

| ith surface | ri | di (407nm) | ni (407nm) | di (655nm) | ni (655nm) | di (785nm) | ni (785nm) |
|---|---|---|---|---|---|---|---|
| 0 | | ∞ | | -600.00 | | 185.00 | |
| 1<br>*1 | ∞ | 0.1<br>(ϕ4.16mm) | | 0.1<br>(ϕ4.23mn) | | 0.1<br>(ϕ3.40nm) | |
| 2 | 2.02108 | 1.90000 | 1.542771 | 1.90000 | 1.52915 | 1.90000 | 1.52541 |
| 3 | -9.54846 | 1.75 | 1.0 | 1.78 | 1.0 | 1.48 | 1.0 |
| 4 | ∞ | 0.6 | 1.61869 | 0.6 | 1.57752 | 1.2 | 1.57063 |
| 5 | ∞ | | | | | | |

*1: (Aperture)

* The symbol di shows a displacement from ith surface to (i + 1)th surface.

Aspheric surface data

Second surface

Aspheric surface coefficient

| | |
|---|---|
| $\kappa$ | -4.4201 × E-1 |
| A4 | -6.6218 × E-4 |
| A6 | -1.4866 × E-3 |
| A8 | +5.2339 × E-4 |
| A10 | -1.0140 × E-4 |
| A12 | +8.5260 × E-6 |
| A14 | -1.1279 × E-6 |

Optical path difference function

| | |
|---|---|
| B2 | -2.5983 |
| B4 | -2.8209 × E-1 |
| B6 | -2.7379 × E-1 |
| B8 | +5.2629 × E-2 |
| B10 | -5.2204 × E-3 |

Third surface

Aspheric surface coefficient

| | |
|---|---|
| $\kappa$ | -1.7944 × E+2 |
| A4 | -9.8565 × E-3 |
| A6 | +1.1687 × E-2 |
| A8 | -5.1568 × E-3 |
| A10 | +1.1684×E-3 |
| A12 | -1.4004 × E-4 |
| A14 | +7.0266×E-6 |

As shown in Table 1, the objective lens of the present example is an objective lens for compatibility for HD, DVD and CD, and focal length f1 is set to 3.20 mm, magnification m1 is set to 0 and NA1 is set to 0.65 for wavelength $\lambda 1$ of 407 nm, focal length f2 is set to 3.27 mm, magnification m2 is set to 1/185.2 and NA2 is set to 0.65 for wavelength $\lambda 2$ of 655 nm, and focal length f3 is set to 3.27 mm, magnification m3 is set to -1/55.6 and NA3 is set to 0.51 for wavelength $\lambda 3$ of 785 nm.

Each of a plane of incidence (second surface) and a plane of emergence (third surface) is formed to be an aspheric surface that is stipulated by a numerical expression wherein a coefficient shown in Table 1 is substituted in the following Numeral 2, and is axially symmetric about optical axis L;

(Numeral 2)

$$x = \frac{h^2/r}{1+\sqrt{1-(1+\kappa)(h/r)^2}} + \sum_{i=2} A_{2i} h^{2i} .$$

Where, x represents an axis in the optical axis direction (traveling direction of light is positive), κ represents a conic constant and $A_{2i}$ represents an aspheric surface coefficient.

On each of the second surface and the third surface, there is formed diffractive structure DOE. This diffractive structure DOE is expressed by an optical path difference added to a transmission wave front by this structure. This optical path difference is expressed by optical path difference function ϕ (h) (mm) defined by substituting a coefficient shown in Table 1 in the following Numeral 3, when h (mm) represents a height in the direction perpendicular to the optical axis, $B_{2i}$ represents an optical path difference function coefficient, n represents a diffraction order number of diffracted light having the maximum diffraction efficiency among diffracted light of an incident light flux, λ (nm) represents a wavelength of a light flux entering the diffractive structure, λB (nm) represents a manufacture wavelength of the diffractive structure and λB represents blazed wavelength (1.0 mm in the present example) of the diffractive structure DOE

(Numeral 3)

Optical path difference function

$$\Phi(h) = \left(\sum_{i=0}^{5} B_{2i} h^{2i}\right) \times n \times \lambda/\lambda B$$

Incidentally, the Numeral 1 above is one wherein ($B_{2i}$ x n x λ/λB) is replaced by $C_{2i}$ in Numeral 3. Namely, the relationship of $B_{2i}$ x n x λ/λB = $C_{2i}$ holds.

In Example 1, when wavefront aberration under the standard condition of HD is 0.001 λrms, wavefront aberration in the case of wavelength fluctuation (-5 nm) accompanied by no ambient temperature change is 0.042 λrms, wavefront aberration in the case of wavelength fluctuation (±1.5 nm, +30°C) accompanied by ambient temperature change is 0.040 λrms, and wavefront aberration generated when the second light flux enters as a gently converged light in the case of tracking of the objective lens (in the case of moving by 0.3 mm in the direction perpendicular to the optical axis) is 0.001 λrms.

Thus, the foregoing confirmed that the objective lens of the present example has excellent wavelength characteristics, temperature characteristics and tracking characteristics.

Example 2

Table 2 shows lens data of Example 2.

(Table 2)

| Example 2 Lens data | | | |
|---|---|---|---|
| Focal length of objective lens | $f_1$=3·2mm | $f_2$=3.27mm | $f_3$=3.27mm |
| Numerical aperture on the image side | NA1:0.65 | NA2:0.65 | NA3:0.51 |
| Diffraction order number on 2nd surface | n1:3 | n2:2 | n3:2 |
| Magnification | m1:-1/185.2 | m2:0 | m3:-1/44.8 |

| ith surface | ri | di(407nm) | ni (407nm) | di (655nm) | ni (655nm) | di (785nm) | ni (785nm) |
|---|---|---|---|---|---|---|---|
| 0 | | 600.00 | | ∞ | | 130.00 | |
| 1<br>*1 | ∞ | 0.1<br>(ϕ4.18mm) | | 0.1<br>(ϕ4.25mm) | | 0.1<br>(ϕ3.41mm) | |
| 2 | 2.02450 | 1.90000 | 1.542771 | 1.90000 | 1.52915 | 1.90000 | 1.52541 |
| 3 | -9.52153 | 1.76 | 1.0 | 1.80 | 1.0 | 1.50 | 1.0 |
| 4 | ∞ | 0.6 | 1.61869 | 0.6 | 1.57752 | 1.2 | 1.57063 |
| 5 | ∞ | | | | | | |

*1: (Aperture diameter)
* The symbol di shows a displacement from ith surface to (i + 1)th surface.

Aspheric surface data

Second surface

| Aspheric surface coefficient | |
|---|---|
| κ | **-4.4431 × E-1** |
| **A4** | **-9.1275 × E-4** |
| **A6** | **-1.4646 × E-3** |
| **A8** | **+5.2560 × E-4** |
| **A10** | **-1.0309 × E-4** |
| **A12** | **+8.1328 × E-6** |
| **A14** | **-9.6245 × E-7** |

| Optical path difference function | |
|---|---|
| **B2** | **-2.7376** |
| **B4** | **-2.9254 × E-1** |
| **B6** | **-2.7583 × E-1** |
| **B8** | **+5.3981 × E-2** |
| **B10** | **-5.3153 × E-3** |

Third surface

| Aspheric surface coefficient | |
|---|---|
| κ | **-1.7044 × E+2** |
| **A4** | **-1.0136×E-2** |
| **A6** | **+1.696 × E-2** |
| **A8** | **-5.1401 × E-3** |
| **A10** | **+1.1691 × E-3** |
| **A12** | **-1.4077 ×E-4** |
| **A14** | **+7.0989 × E-6** |

As shown in Table 2, the objective lens of the present example is also an objective lens for compatibility for HD, DVD and CD, and focal length f1 is set to 3.20 mm, magnification m1 is set to -1/185.2 and NA1 is set to 0.65 for wavelength λ1 of 407 nm, focal length f2 is set to 3.27 mm, magnification m2 is set to 0 and NA2 is set to 0.65 for wavelength λ2 of 655 nm, and focal length f3 is set to 3.27 mm, magnification m3 is set to -1/44.8 and NA3 is set to 0.51 for wavelength λ3 of 785 nm.

Each of a plane of incidence (second surface) and a plane of emergence (third surface) is formed to be an aspheric surface that is stipulated by a numerical expression wherein a coefficient shown in Table 2 is substituted in the following Numeral 2, and is axially symmetric about optical axis L.

On each of the second surface and the third surface, there is formed diffractive structure DOE. This diffractive structure DOE is expressed by an optical path difference added to a transmission wave front by this structure, and this optical path difference is expressed by optical path difference function ϕ (h) (mm) defined by substituting a coefficient shown in Table 2 in the above Numeral 3. Incidentally, a blazed wavelength in the present example is 1.0 mm.

In Example 2, when wavefront aberration under the standard condition of HD is 0.001 λrms, wavefront aberration in the case of wavelength fluctuation (-5 nm) accompanied by no ambient temperature change is 0.043 λrms, wavefront aberration in the case of wavelength fluctuation (+1.5 nm, +30°C) accompanied by ambient temperature change is 0.042 λrms, and wavefront aberration generated when the first light flux enters as a gently divergent light in the case of tracking of the objective lens (in the case of moving by 0.3 mm in the direction perpendicular to the optical axis) is 0.001 λrms.

Thus, the foregoing confirmed that the objective lens of the present example has excellent wavelength characteristics, temperature characteristics and tracking characteristics.

Example 3

Table 3 shows lens data of Example 3.

(Table 3)

| Example 3 Lens data | | | |
|---|---|---|---|
| Focal length of objective lens | $f_1$=3.1mm | $f_2$=3.23mm | $f_3$=3.23mm |
| Numerical aperture on the image side | NA1:0.65 | NA2:0.65 | NA3:0.51 |
| Optical system magnification | m1=1/28.4 | m2=0 | m3=-1/35.6 |

| $i^{th}$ surface | ri | di (407nm) | ni (407nm) | di (655nm) | ni (655nm) | di (785nm) | ni (785m) |
|---|---|---|---|---|---|---|---|
| 0 | | -85 | | ∞ | | 117.84 | |
| 1<br>*1 | ∞ | 0.1<br>(ϕ5.10mm) | | 0.1<br>(ϕ5.10mm) | | 0.0<br>(ϕ5.10mm) | |
| 2 | 1.9749 | 1.76 | 1.5598 | 1.76 | 1.5407 | 1.76 | 1.5372 |
| 2' | 1.9549 | -0.00318 | 1.5598 | -0.00318 | 1.5407 | -0.00318 | 1.5372 |
| 3 | -16.8766 | 1.57 | 1.0 | 1.79 | 1.0 | 1.49 | 1.0 |
| 4 | ∞ | 0.6 | 1.619 | 0.6 | 1.578 | 1.2 | 1.571 |
| 5 | ∞ | | | | | | |

*1: (Aperture diameter)
* The symbol di shows a displacement from $i^{th}$ surface to $(i + 1)^{th}$ surface.

Aspheric surface data

Second surface (0.00 mm ≤ h ≤ 1.923 mm)

| Aspheric surface coefficient | |
|---|---|
| κ | -5.3412E-01 |
| A4 | -3.6678E-04 |
| A6 | 9.6666E-04 |
| A8 | -1.3357E-04 |
| A10 | -6.7434E-05 |
| A12 | 2.5231E-05 |
| A14 | -3.3947E-06 |

| Optical path difference function (HD DVD: Second order DVD: First order CD: First order Blazed wavelength 395 nm) | |
|---|---|
| B2 | -4.1750E-03 |
| B4 | -7.7289E-04 |
| B6 | 2.6000E-04 |
| B8 | 1.1363E-04 |
| B10 | 1.3297E-05 |

2' th surface (1.923 mm < h)

| Aspheric surface coefficient | |
|---|---|
| κ | -4.6325E-01 |
| A4 | -1.0459E-03 |
| A6 | 1.0481E-03 |
| A8 | -2.2135E-04 |
| A10 | -1.4718E-04 |
| A12 | 4.2668E-05 |
| A14 | -4.4685E-06 |

| Optical path difference function (DVD: First order Blazed wavelength 655 nm) | |
|---|---|
| B2 | -4.8566E-03 |
| B4 | -1.5415E-03 |
| B5 | 5.4916E-04 |
| B8 | -2.6736E-04 |
| B10 | 2.8878E-05 |

Third surface

| Aspheric surface coefficient | |
|---|---|
| κ | -6.4929E+01 |
| A4 | 1.0027E-02 |
| A6 | -6.1455E-04 |
| A8 | 9.4174E-03 |
| A10 | 1.3454E-04 |
| A12 | -8.8891E-06 |
| A14 | -1.1303E-07 |

As shown in Table 3, the objective lens of the present example is an objective lens for compatibility for HD, DVD and CD, and focal length f1 is set to 3.1 mm, magnification m1 is set to 1/28.4 and NA1 is set to 0.65 for wavelength λ1 of 407 nm, focal length f2 is set to 3.23 mm, magnification m2 is set to 0 and NA2 is set to 0.65 for wavelength λ2 of 655 nm, and focal length f3 is set to 3.23 mm, magnification m3 is set to -1/35.6 and NA3 is set to 0.51 for wavelength λ3 of 785 nm.

In Example 3, when wavefront aberration under the standard condition of HD is 0.000 λrms, wavefront aberration in the case of wavelength fluctuation (-5 nm) accompanied by no ambient temperature change is 0.024 λrms, wavefront aberration in the case of wavelength fluctuation (+1.5 nm, +30°C) accompanied by ambient temperature change is 0.019 λrms, and wavefront aberration generated when the first light flux enters as a gently converged light in the case of tracking of the objective lens (in the case of moving by 0.3 mm in the direction perpendicular to the optical axis) is 0.003 λrms .

Thus, the foregoing confirmed that the objective lens of the present example has excellent wavelength characteristics, temperature characteristics and tracking characteristics.

Example 4

Table 4 shows lens data of Example 4.

(Table 4)

| Example 4 Lens data | | | | | | | |
|---|---|---|---|---|---|---|---|
| Focal length of objective $f_1$=3.10mm lens | | | | | $f_2$=3.18mm | $f_3$=3.20mm | |
| Numerical aperture on the image side | | | | NA1:0.65 | NA2: 0.65 | NA3:0.51 | |
| Optical system magnification | | | | m1:1/33.2 | m2:-1/125 | m3:-1/27.9 | |
| | | | | | | | |
| $i^{th}$ surface | ri | di (407nm) | ni (407nm) | di (655nm) | ni (655nm) | di (785nm) | ni (785nm) |
| 0 | | -100 | | 400 | | 92.07 | |
| 1<br>*1 | ∞ | 0.0<br>(ϕ3.916nm) | | 0.0<br>(ϕ4.162mm) | | 0.0<br>(ϕ3.374mm) | |
| 2 | 1.8771 | 1.76 | 1.5428 | 1.76 | 1.5292 | 1.76 | 1.5254 |
| 2' | -10.8800 | 0.0036705 | 1.5428 | 0.036705 | 1.5292 | 0.036705 | 1.5254 |
| 3 | ∞ | 1.47 | 1.0 | 1.69 | 1.0 | 1.52 | 1.0 |
| 4 | ∞ | 0.6 | 1.619 | 0.6 | 1.578 | 1.2 | 1.571 |
| 5 | ∞ | | | | | | |
| *1: (Aperture diameter)<br>* The symbol di shows a displacement from $i^{th}$ surface to $(i + 1)^{th}$ surface. | | | | | | | |

Aspheric surface data

Second surface (0.00 mm ≤ h ≤ 1.937 mm)

| Aspheric surface coefficient | |
|---|---|
| κ | -5.7664E-01 |
| A4 | -5.1225E-04 |
| A6 | 1.1730E-03 |
| A8 | -2.5893E-04 |
| A10 | 1.5274E-05 |
| A12 | 3.9428E-06 |
| A14 | -9.3936E-07 |

Optical path difference function (HD DVD: Second order DVD: First order CD: First order Blazed wavelength 395 nm)

| | |
|---|---|
| B2 | 0.0000E+00 |
| B4 | -6.9990E-04 |
| B6 | 26581E-04 |
| B8 | -1.0347E-04 |
| B10 | 1.1697E-06 |

2'th surface (1.937 mm < h)

| Aspheric surface coefficient | |
|---|---|
| κ | -4.4960E-01 |
| A4 | -8.7504E-04 |
| A6 | 1.01 43E-03 |
| A8 | -20800E-04 |
| A10 | -1.4014E-04 |
| A12 | 4.4748E-05 |
| A14 | -4.91 97E-06 |

| Optical path difference function (DVD: First order Blazed wavelength 655 nm) | |
|---|---|
| B2 | 1.2369E-03 |
| B4 | -4.7072E-04 |
| B6 | 1.5695E-04 |
| B8 | -8.3251 E-06 |
| B10 | 7,9886E-06 |

Third surface

| Aspheric surface coefficient | |
|---|---|
| κ | -5.4906E+01 |
| A4 | 8.6856E-03 |
| A6 | -4.1025E-04 |
| A8 | -5.0702E-04 |
| A10 | 1.1265E-04 |
| A12 | -6.8623E-06 |
| A14 | -2.0380E-07 |

As shown in Table 4, the objective lens of the present example is an objective lens for compatibility for HD, DVD and CD, and focal length f1 is set to 3.10 mm, magnification m1 is set to 1/33.2 and NA1 is set to 0.65 for wavelength $\lambda 1$ of 407 nm, focal length f2 is set to 3.18 mm, magnification m2 is set to -1/125 and NA2 is set to 0.65 for wavelength $\lambda 2$ of 655 nm, and focal length f3 is set to 3.20 mm, magnification m3 is set to -1/27.9 and NA3 is set to 0.51 for wavelength $\lambda 3$ of 785 nm.

In Example 4, when wavefront aberration under the standard condition of HD is 0.000 λrms, wavefront aberration in the case of wavelength fluctuation (-5 nm) accompanied by no ambient temperature change is 0.028 λrms, wavefront aberration in the case of wavelength fluctuation (+1.5 nm, +30°C) accompanied by ambient temperature change is 0.040 λrms, and wavefront aberration generated when the first light flux enters as a gently converged light in the case of tracking of the objective lens (in the case of moving by 0.3 mm in the direction perpendicular to the optical axis) is 0.002 λrms.

Thus, the foregoing confirmed that the objective lens of the present example has excellent wavelength characteristics, temperature characteristics and tracking characteristics.

Example 5

Table 5 shows lens data of Example 5.

(Table 5)

| Example 5 Lens data | | | | | |
|---|---|---|---|---|---|
| Focal length of objective lens | | | $f_1$=3.10mm | | $f_2$=3.15mm |
| Numerical aperture on the image side | | | NA1:0.65 | | NA2:0.65 |
| Optical system magnification | | | m1:-1/256.4 | | m2=0 |
| | | | | | |
| $i^{th}$ surface | ri | di(407nm) | ni (407nm) | di (655nm) | ni (655nm) |
| 0 | | 800 | | ∞ | |
| 1 (Aperture diameter) | ∞ | 0.0 (ϕ4.045nm) | | 0.0 (ϕ4.096nm) | |
| 2 | 2.0515 | 1.76 | 1.5497 | 1.76 | 1.5323 |
| 3 | -10.8313 | 1.73 | 1.0 | 1.74 | 1.0 |
| 4 | ∞ | 0.6 | 1.619 | 0.6 | 1.578 |
| 5 | ∞ | | | | |

Aspheric surface data

Second surface

| Aspheric surface coefficient | |
|---|---|
| κ | -6.3092E-01 |
| A4 | 2.1514E-03 |
| A6 | 4.6651E-04 |
| A8 | 1.0702E-04 |
| A10 | 4.4963E-05 |
| A12 | -1.2538E-05 |
| A14 | 1.0802E-06 |

| Optical path difference function (HD DVD: Fourth order DVD: Third order Blazed wavelength 410 nm) | |
|---|---|
| B2 | -2.5823E-03 |
| B4 | -1.5482E-04 |
| B6 | 7.9668E-06 |
| B8 | -2.2233E-06 |
| B10 | 1.0911E-07 |

Third surface

| Aspheric surface coefficient | |
|---|---|
| κ | 5.0000E+00 |
| A4 | 1.5698E-02 |
| A6 | -2.7118E-03 |
| A8 | -5.8797E-05 |
| A10 | 1.2863E-04 |
| A12 | -2.2582E-06 |

(continued)

| Aspheric surface coefficient | |
|---|---|
| A14 | 1.3551E-06 |

As shown in Table 5, the objective lens of the present example is an objective lens for compatibility for HD and DVD, and focal length f1 is set to 3.10 mm, magnification m1 is set to -1256.4 and NA1 is set to 0.65 for wavelength λ1 of 407 nm, and focal length f2 is set to 3.15 mm, magnification m2 is set to 0 and NA2 is set to 0.65 for wavelength λ2 of 655 nm.

In Example 5, when wavefront aberration under the standard condition of HD is 0.000 λrms, wavefront aberration in the case of wavelength fluctuation (-5 nm) accompanied by no ambient temperature change is 0.009 λrms, wavefront aberration in the case of wavelength fluctuation (+1.5 nm, +30°C) accompanied by ambient temperature change is 0.060 λrms, and wavefront aberration generated when the first light flux enters as a gently divergent light in the case of tracking of the objective lens (in the case of moving by 0.3 mm in the direction perpendicular to the optical axis) is 0.000 λrms.

Thus, the foregoing confirmed that the objective lens of the present example has excellent wavelength characteristics, temperature characteristics and tracking characteristics.

Example 6

Table 6 shows lens data of Example 6.

(Table 6)

| Example 6 Lens data | | | | | |
|---|---|---|---|---|---|
| Focal length of objective lens | | | | $f_1$=3.10mm | $f_2$=3.15mm |
| Numerical aperture on the image side | | | | NA1:0.65 | NA2:0.65 |
| Optical system magnification | | | | m1:-1/256.4 | m2=1/192.3 |
| | | | | | |
| $i^{th}$ surface | ri | di (407nm) | ni (407nm) | di (655nm) | ni (655nm) |
| 0 | | 800 | | -600 | |
| 1 (Aperture diameter) | ∞ | 0.0 (ϕ4.045mm) | | 0.0 (ϕ4.073mm) | |
| 2 | 2.0514 | 1.76 | 1.5497 | 1.76 | 1.5323 |
| 3 | -11.1475 | 1.72 | 1.0 | 1.72 | 1.0 |
| 4 | ∞ | 0.6 | 1.619 | 0.6 | 1.578 |
| 5 | ∞ | | | | |

Aspheric surface data

Second surface

| Aspheric surface coefficient | |
|---|---|
| κ | -6.3592E-01 |
| A4 | 1.9893E-03 |
| A6 | 4.8406E-04 |
| A8 | -1.1063E-04 |
| A10 | 4.1773E-05 |
| A12 | -1.1083E-05 |
| A14 | 9.3781E-07 |

| Optical path difference function (HD DVD: Fourth order DVD: Third order Blazed wavelength 410 nm) | |
|---|---|
| B2 | -2.7101 E-03 |
| B4 | -1.8581E-04 |
| B6 | -4.0646E-06 |
| B8 | -4.3907E-06 |
| B10 | 3.6580E-07 |

Third surface

| Aspheric surface coefficient | |
|---|---|
| κ | 5.0000E+00 |
| A4 | 1.5116E-02 |
| A6 | -2.4896E-03 |
| A8 | -9.4311E-05 |
| A10 | 1.2912E-04 |
| A12 | -2.2230E-05 |
| A14 | 1.3298E-06 |

As shown in Table 6, the objective lens of the present example is an objective lens for compatibility for HD and DVD, and focal length f1 is set to 3.10 mm, magnification m1 is set to -1256.4 and NA1 is set to 0.65 for wavelength λ1 of 407 nm, and focal length f2 is set to 3.15 mm, magnification m2 is set to 1/192.3 and NA2 is set to 0.65 for wavelength λ2 of 655 nm.

In Example 6, when wavefront aberration under the standard condition of HD is 0.000 λrms, wavefront aberration in the case of wavelength fluctuation (-5 nm) accompanied by no ambient temperature change is 0.014 λrms, wavefront aberration in the case of wavelength fluctuation (+1.5 nm, +30°C) accompanied by ambient temperature change is 0.057 λrms, and wavefront aberration generated when the first light flux enters as a gently divergent light in the case of tracking of the objective lens (in the case of moving by 0.3 mm in the direction perpendicular to the optical axis) is 0.000 λrms.

Thus, the foregoing confirmed that the objective lens of the present example has excellent wavelength characteristics, temperature characteristics and tracking characteristics.

## INDUSTRIAL APPLICABILITY

The invention makes it possible to obtain an objective lens that is used for reproducing and/or recording of information for at least two types of optical discs including a high density optical disc, and has excellent wavelength characteristics, temperature characteristics and tracking characteristics, and to obtain an optical pickup apparatus employing the aforesaid objective lens.

## Claims

**1.** An objective lens for use in an optical pickup apparatus at least reproducing and/or recording information using a light flux with a wavelength λ1 emitted by a first light source for a first optical disc having a protective substrate with a thickness t1 and reproducing and/or recording information using a light flux with a wavelength λ2 (1.5 x λ1 ≤ λ2 ≤ 1.7 x λ1) emitted by a second light source for a second optical disc having a protective substrate with a thickness t2 (0.8 x t1 ≤ t2), the objective lens comprising:

a diffractive structure formed on the at least one optical surface of the objective lens,
wherein each of the light flux with the wavelength λ1 and the light flux with the wavelength λ2 enter the objective lens,
an optical system magnification m1 of the objective lens for the light flux with a wavelength λ1 and an optical system magnification m2 of the objective lens for the light flux with a wavelength λ2 have different signs and values from each other, and

the diffractive structure has a positive diffractive action.

2. The objective lens of claim 1,
the diffractive structure is defined by using an optical path difference function $\phi(h)$:

$$\phi(h) = C_2 \times h^2 + C_4 \times h^4 + \ldots + C_{2i} \times h^{2i}$$

and satisfies $C_4 < 0$
where h is a height from an optical axis,
$C_{2i}$ is a coefficient of the optical path difference function, and
i is a natural number.

3. The objective lens of claim 2 satisfying $-1.0 \times 10^{-3} < C_4 < -1.0 \times 10^{-4}$.

4. The objective lens of claim 3 satisfying $-7.0 \times 10^{-4} < C_4 < -4.5 \times 10^{-4}$.

5. The objective lens of claim 3,
wherein the diffractive structure is a diffractive structure formed of a plurality of concentric ring-shaped zones around the optical axis,
a cross section of the diffractive structure including the optical axis has a serrated shape, and
a distance d of a step of each of the plurality of ring-shaped zones along an optical axis satisfies

$$(2N - 1) \times \lambda 1 / (n1 - 1) \leq d < 2N \times \lambda 1 / (n1 - 1),$$

where n1 is a refractive index of the objective lens for a light flux with the wavelength λ1, and N is a natural number.

6. The objective lens of claim 5,
wherein N is 2.

7. The objective lens of claim 1,
wherein a wavefront aberration change amount ΔW [λrms] generated when a wavelength of the light flux with the wavelength λ1 changes +5nm, satisfies $\Delta W \leq 0.05$.

8. The objective lens of claim 1,
wherein at least one of the optical system magnification m1 and the optical system magnification m2 is larger than 0 and is not more than 1/100.

9. The objective lens of claim 1,
wherein a diffractive power of the diffractive structure is negative.

10. The objective lens of claim 9,
wherein a change amount of a position where a wavefront aberration is minimum dfb/dλ of the objective lens along an optical axis per 1 nm of a wavelength change for the light flux with the wavelength λ1 satisfies

$$|dfb/d\lambda| \leq 0.1\ [\mu m/nm],$$

where fb is a distance from the objective lens to the first optical disc.

11. The objective lens of claim 9,
wherein a change amount of a position where a wavefront aberration is minimum dfb/dλ of the objective lens along an optical axis per 1nm of a wavelength change for the light flux with the wavelength λ2 satisfies

$$|dfb/d\lambda| \leq 0.1 \ [\mu m/nm],$$

where fb is a distance from the objective lens to the second optical disc.

**12.** The objective lens of claim 1, satisfying t1 = t2.

**13.** The objective lens of claim 1, satisfying NA1 = NA2, when NA1 is an numerical aperture of an emergence side of the objective lens for the light flux with the wavelength $\lambda 1$, and NA2 is an numerical aperture of an emergence side of the objective lens for the light flux with the wavelength $\lambda 2$.

**14.** The objective lens of claim 1,
wherein the first light source and the second light source are provided as separated bodies.

**15.** The objective lens of claim 14,
wherein each of the first light source and the second light source is provided on an optical axis.

**16.** The objective lens of claim 1,
wherein a chromatic aberration correcting element having a function of correcting a chromatic aberration of a passing light flux, is provided on at least one of optical paths of the light fluxes with the wavelength $\lambda 1$ and the wavelength $\lambda 2$.

**17.** The objective lens of claim 16,
wherein the chromatic aberration correcting element is a collimating lens.

**18.** The objective lens of claim 1,
wherein the objective lens is further used for an optical pickup apparatus reproducing and/or recording information using a light flux with a wavelength $\lambda 3$ ($1.8 \times \lambda 1 \leq \lambda 3 \leq 2.2 \times \lambda 1$) emitted by the third light source for the third optical disc having a protective substrate with a thickness t3 (t2 < t3), and
each of the light fluxes with the wavelength $\lambda 1$, the wavelength $\lambda 2$ and the wavelength $\lambda 3$ enters into the objective lens.

**19.** The objective lens of claim 18,
wherein an aperture limiting element is arranged on an optical path of the light flux with the wavelength $\lambda 3$.

**20.** The objective lens of claim 18,
wherein an optical system magnification m3 of the objective lens for the light flux with the wavelength $\lambda 3$ satisfies

$$-1/10 \leq m3 \leq -1/100.$$

**21.** The objective lens of claim 18,
wherein the first light source, the second light source and the third light flux are provided as separated bodies.

**22.** The objective lens of claim 21,
wherein each of the first light source, the second light source and the third light source is provided on an optical axis.

**23.** The objective lens of claim 18,
wherein a chromatic aberration correcting element having a function of correcting a chromatic aberration of a passing light flux, is provided on at least one of optical paths of the light fluxes with the wavelength $\lambda 1$, the wavelength $\lambda 2$ and the wavelength $\lambda 3$.

**24.** The objective lens of claim 23,
wherein the chromatic aberration correcting element is a collimating lens.

**25.** The objective lens of claim 1,
wherein a focal length f1 of the objective lens for the light flux with the wavelength $\lambda 1$ satisfies $0.8 \text{ mm} \leq f1 \leq 4.0 \text{ mm}$.

**26.** The objective lens of claim 1,
wherein the objective lens is made of plastic.

**27.** The objective lens of claim 26,
wherein the plastic is a resin composition comprising:

a polymer having an ethylenically unsaturated monomer unit containing an alicyclic group; and
an antioxidant having a phosphoric ester structure and a phenol structure in a molecule.

**28.** The objective lens of claim 26,
wherein the plastic is a resin composition comprising:

a polymer having an ethylenically unsaturated monomer unit containing an alicyclic group; and
an antioxidant represented by a general formula (1).

Formula (1)

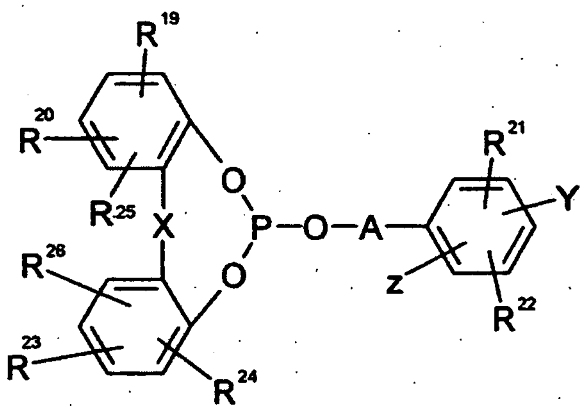

(1)

(In the general formula (1), R19 through R24 each independently represent a hydrogen atom, an alkyl group having 1 to 8 carbon atoms, a cycloalkyl group having 5 to 8 carbon atoms, an alkyl cycloalkyl group having 6 to 12 carbon atoms, or an aralkyl group or a phenyl group having 7 to 12 carbon atoms,
R25 through R26 each independently represent a hydrogen atom or an alkyl group having 1 to 8 carbon atoms. X represents a single bond, a sulfur atom, or a -CHR27-group (R27 represents a hydrogen atom, an alkyl group having 1 to 8 carbon atoms, or a cycloalkyl group having 5 to 8 carbon atoms.). A represents an alkylene group having 2 to 8 carbon atoms, or a *-COR28-group (R28 represents single bond or an alkylene group having 1 to 8 carbon atoms and * represents that it is bonded to oxygen side.). One of Y and Z represents a hydroxyl group, an alkoxy group having 1 to 8 carbon atoms, or an aralkyl oxygroup having 7 to 12 carbon atoms, and, the other represents a hydrogen atom or an alkyl group having 1 to 8 carbon atoms.)

**29.** An optical pickup apparatus for at least reproducing and/or recording information for a first optical disc having a protective substrate with a thickness t1 and reproducing and/or recording information for a second optical disc having a protective substrate with a thickness t2 ($0.8 \times t1 \leq t2$), the optical pickup apparatus comprising:

a first light source for emitting a light flux with a wavelength $\lambda 1$ for reproducing and/or recording information for the first optical disc;
a second light source for emitting a light flux with a wavelength $\lambda 2$ ($1.5 \times \lambda 1 \leq \lambda 2 \leq 1.7 \times \lambda 1$) for reproducing and/or recording information for the second optical disc; and
the objective lens of claim 1 for converging the light flux with the wavelength $\lambda 1$ and the light flux with the wavelength $\lambda 2$ respectively on information recording surfaces of the first disc and the second disc, respectively.

FIG. 1 (a)

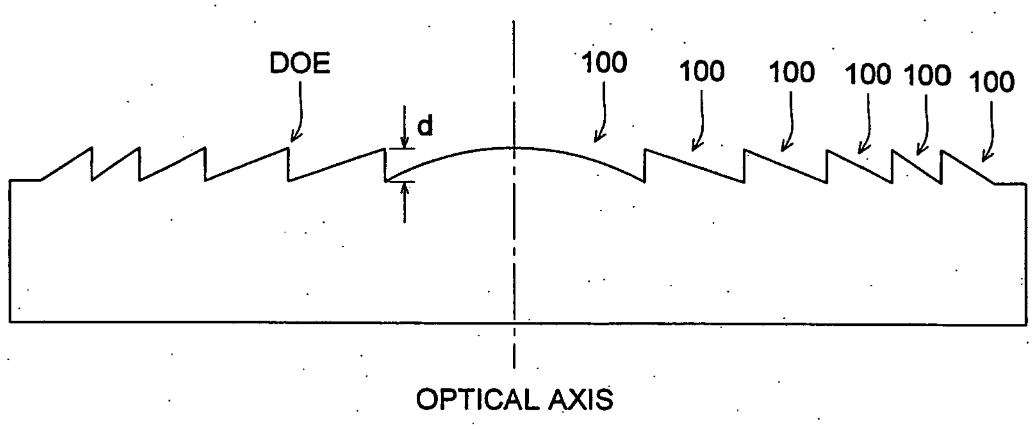
DOE
d
100
100
100
100 100
100
OPTICAL AXIS

FIG. 1 (b)

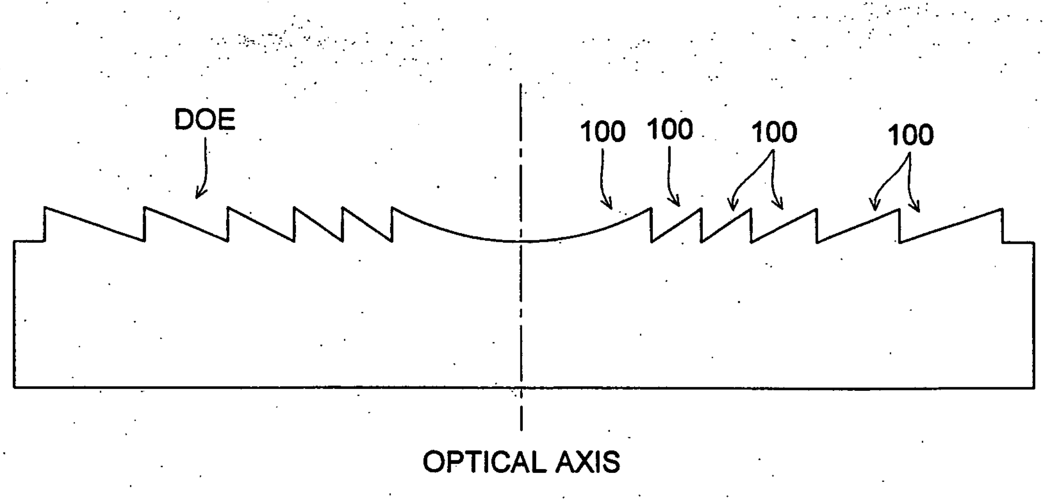
DOE
100 100
100
100
OPTICAL AXIS

FIG. 2 (a)

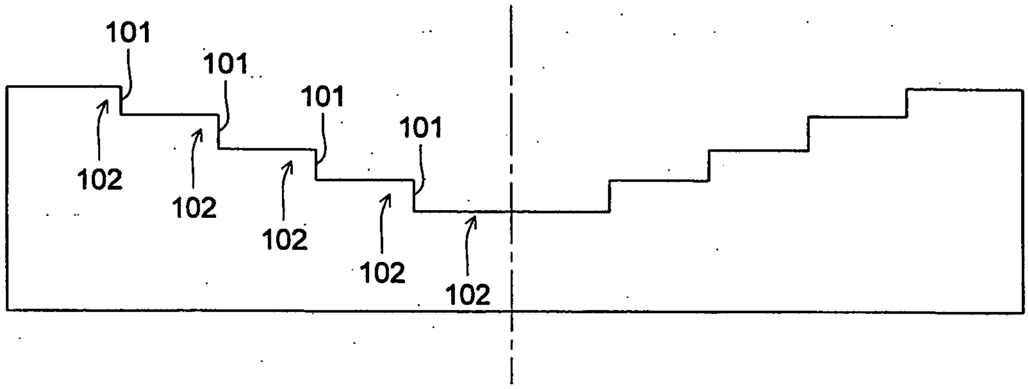


OPTICAL AXIS

FIG. 2 (b)

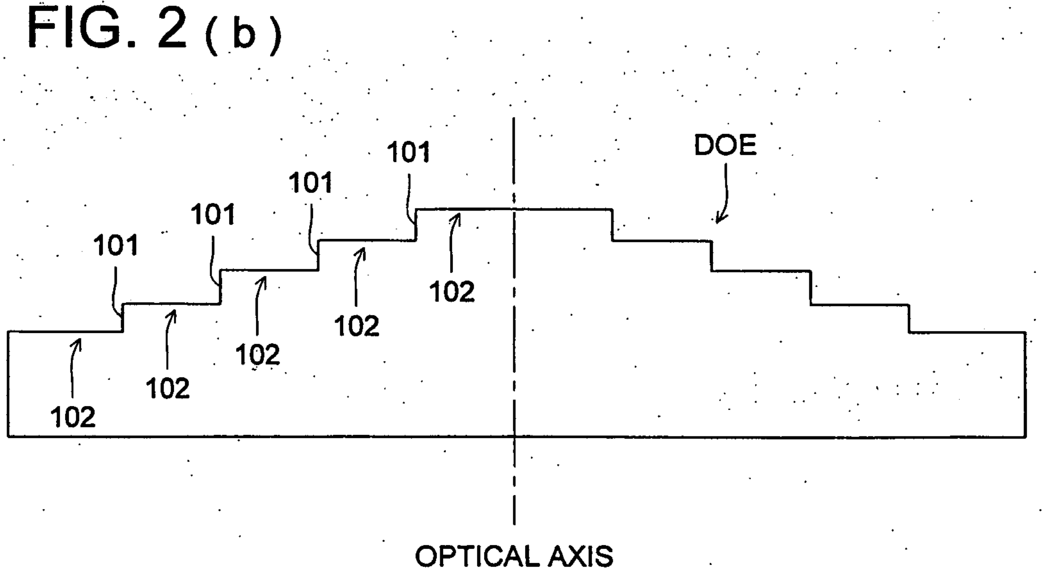


OPTICAL AXIS

FIG. 3 ( a )

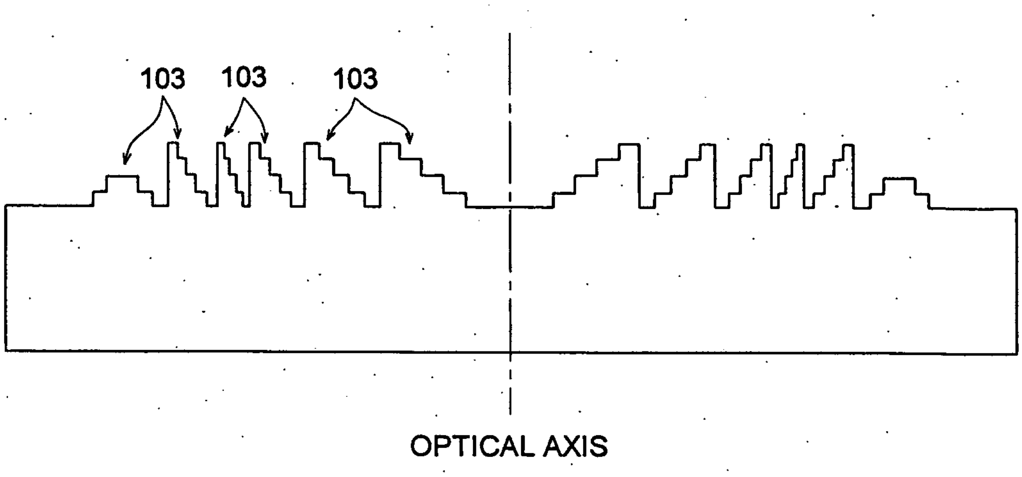


FIG. 3 ( b )

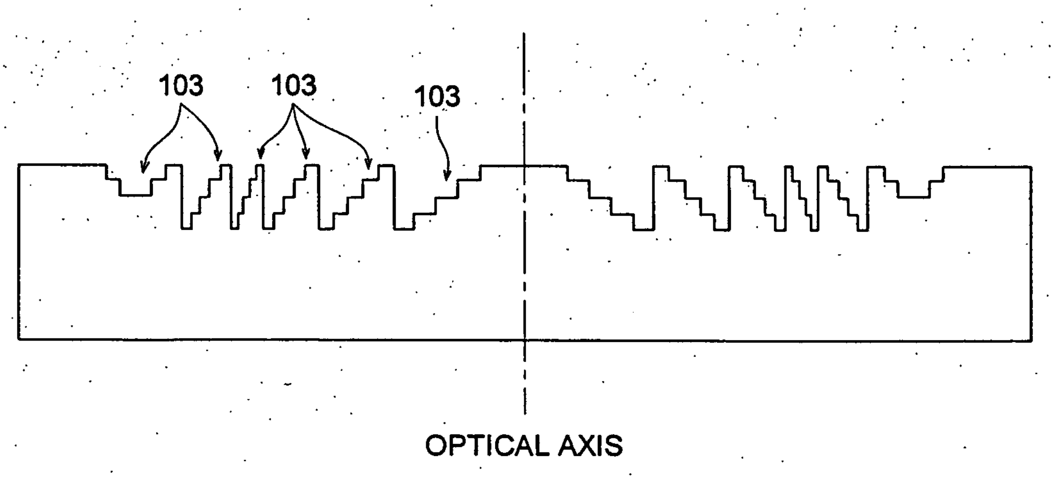

FIG. 4 (a)

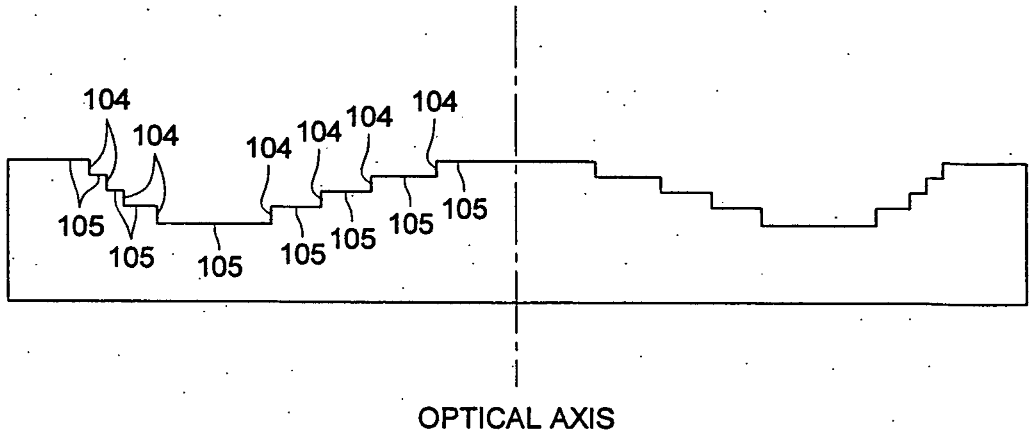
104
104
104
104
104
104
105
105
105
105
105
105
105
105
OPTICAL AXIS

FIG. 4 (b)

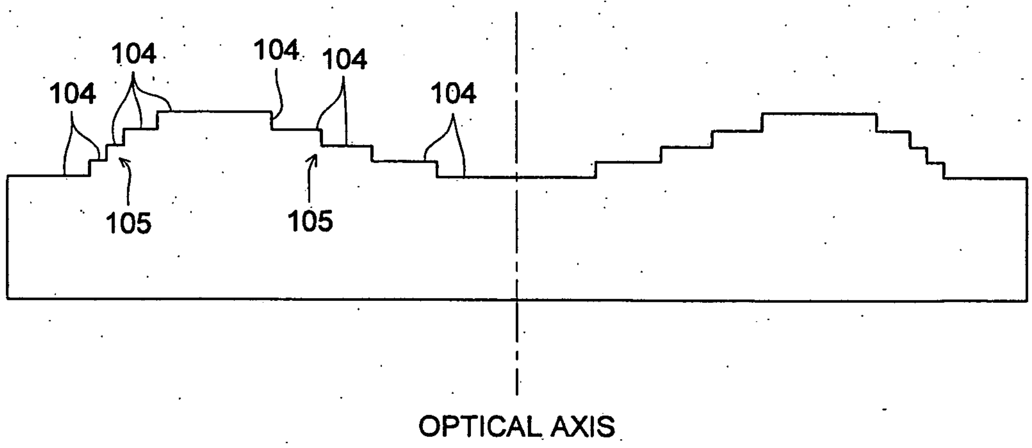
104
104
104
104
104
105
105
OPTICAL AXIS

FIG. 5

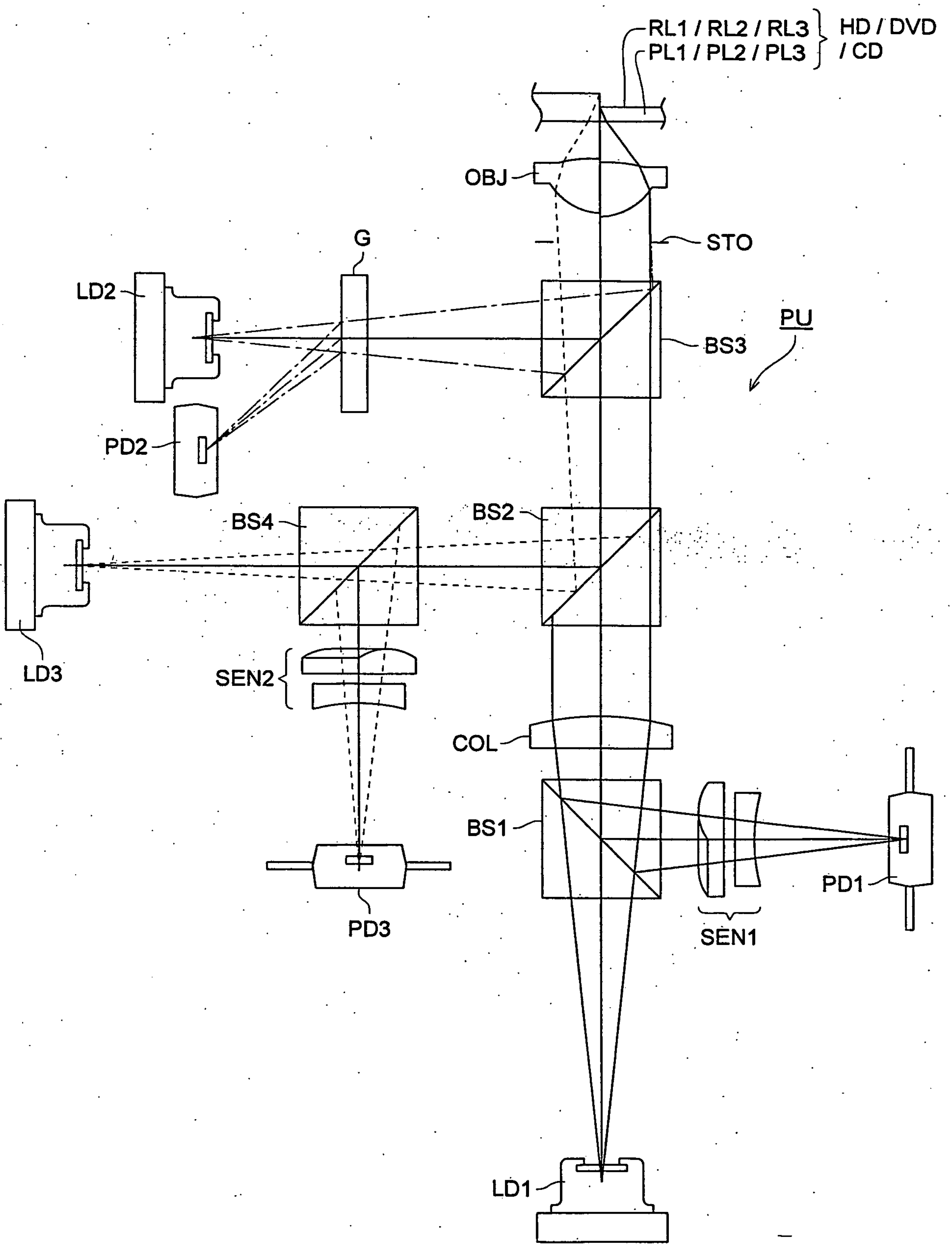
RL1 / RL2 / RL3
PL1 / PL2 / PL3
HD / DVD / CD
OBJ
STO
G
LD2
BS3
PU
PD2
LD3
BS4
BS2
SEN2
COL
BS1
PD1
PD3
SEN1
LD1

## INTERNATIONAL SEARCH REPORT

International application No.
PCT/JP2005/007476

A. CLASSIFICATION OF SUBJECT MATTER
Int.Cl[7] G11B7/135, G02B3/10, 5/18, 13/18

According to International Patent Classification (IPC) or to both national classification and IPC

B. FIELDS SEARCHED

Minimum documentation searched (classification system followed by classification symbols)
Int.Cl[7] G11B7/135, G02B3/10, 5/18, 13/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-109804 A (Konica Minolta Holdings Kabushiki Kaisha), 08 April, 2004 (08.04.04), Full text; all drawings (Family: none) | 1-29 |
| A | JP 2004-101932 A (Konica Minolta Holdings Kabushiki Kaisha), 02 April, 2004 (02.04.04), Full text; all drawings & US 2004-47040 A1 | 1-29 |
| A | JP 2004-71134 A (Matsushita Electric Industrial Co., Ltd.), 04 March, 2004 (04.03.04), Full text; all drawings & US 2003-227858 A1 & EP 1372147 A2 | 1-29 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 July, 2005 (05.07.05) | 19 July, 2005 (19.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002298422 A